# FASCICULE DE BREVET EUROPEEN

(11) **EP 3 689 586 B1**
(45) Date de publication et mention de la délivrance du brevet: **23.08.2023**
(21) Numéro de dépôt: 20154621.5
(22) Date de dépôt: 30.01.2020
(51) Int. Cl.: B29C 70/00, B29C 65/02, B29C 69/00, B64C 1/26, B29C 65/00, B29C 65/62, B29C 65/56, B29C 65/10, B29L 31/30

(54) **PROCÉDÉ DE FABRICATION À PARTIR DE PRÉFORMES D'ÉLÉMENTS DE LIAISON D'UNE AILE D'AÉRONEF À UN CAISSON CENTRAL DE VOILURE**
HERSTELLUNGSVERFAHREN MITHILFE VON VORFORMLINGEN VON VERBINDUNGSELEMENTEN EINES LUFTFAHRZEUGFLÜGELS MIT EINEM ZENTRALGEHÄUSE EINES FLÜGELS
METHOD FOR MANUFACTURING ELEMENTS FROM PREFORMS FOR LINKING A WING OF AN AIRCRAFT WITH A CENTRAL WING UNIT

(30) Priorité: 04.02.2019 FR 1901071
(43) Date de publication de la demande: 05.08.2020
(73) Titulaire: Airbus Operations SAS, 31060 Toulouse (FR)
(72) Inventeur: SOULA, Denis, 31300 Toulouse (FR); VERCAMER, Tanguy, 31300 Toulouse (FR); PRIDIE, Jago, 44000 Nantes (FR)
(74) Mandataire: Gevers & Orès

(56) Documents cités:
- EP-A2- 2 730 498
- FR-A1- 2 948 099
- US-A1- 2013 020 440

## Description

### DOMAINE TECHNIQUE

La présente invention concerne un procédé de fabrication d'éléments de liaison participant à la liaison entre un caisson central de voilure (« center wing box » en anglais) d'un aéronef et une aile de l'aéronef. L'invention concerne également un élément de liaison fabriqué par ledit procédé de fabrication ainsi qu'un aéronef comprenant au moins un tel élément de liaison.

### ÉTAT DE LA TECHNIQUE

Un aéronef comprend un fuselage et des ailes qui sont généralement reliées au fuselage au moyen d'un caisson central de voilure. Les ailes sont fixées au caisson central de voilure par une jonction de base (« root joint » en anglais) comprenant des éléments de liaison. Les documents US 2013/020440, EP 2 730 498 et FR 2 948 099 décrivent des exemples d'éléments de liaison. Les éléments de liaison comprennent, en général, des profilés dont les sections transversales présentent une forme de croix ou de T. La jonction de base a pour fonction principale le transfert des efforts des ailes au caisson central de voilure. Elle a pour fonction secondaire le transfert des efforts du fuselage de l'aéronef au caisson central de voilure. Les éléments de liaison sont métalliques et sont fabriqués par forgeage. Ils sont donc onéreux à fabriquer et demandent de longs temps de fabrication.

### EXPOSÉ DE L'INVENTION

La présente invention a pour objet de pallier ces inconvénients en proposant un procédé de fabrication d'éléments de liaison, qui est rapide et peu onéreux à mettre en oeuvre.

À cet effet, l'invention concerne un procédé de fabrication d'un élément de liaison configuré pour participer à la liaison entre un caisson central de voilure d'un aéronef et une aile de l'aéronef.

Le procédé de fabrication comprend l'ensemble des étapes suivantes :
- une étape de fabrication de préformes en matériau composite formant l'élément de liaison ;
- une étape d'assemblage des préformes par traitement thermique pour former l'élément de liaison,

Selon l'invention, l'étape de fabrication de préformes correspond à une étape de fabrication de cinq préformes,
et en ce que l'étape de fabrication comprend :
- une première sous-étape de fabrication consistant à fabriquer une préforme principale en forme de bande présentant un premier axe longitudinal et présentant une première surface opposée à une deuxième surface et
- quatre deuxièmes sous-étapes de fabrication consistant à fabriquer une première préforme en L, une deuxième préforme en L, une troisième préforme en L et une quatrième préforme en L, la chaque préforme en L correspondant à un profilé présentant un deuxième axe longitudinal dont la section transversale présente une forme de L comprenant une première nappe perpendiculaire à une deuxième nappe,
et l'étape d'assemblage comprend :
- une sous-étape d'assemblage des préformes consistant à assembler les préformes fabriquées dans la première sous-étape de fabrication et les deuxièmes sous-étapes de fabrication, les préformes étant assemblées pour que l'élément de liaison formé par les préformes présente une section transversale cruciforme en faisant en sorte que :
   - la première nappe de la première préforme en L soit accolée à la première nappe de la deuxième préforme en L,
   - la deuxième nappe de la première préforme en L et la deuxième nappe de la deuxième préforme en L soient accolées à la première surface de la préforme principale,
   - la première nappe de la troisième préforme en L soit accolée à la première nappe de la quatrième préforme en L,
   - la deuxième nappe de la troisième préforme en L et la deuxième nappe de la quatrième préforme en L soient accolées à la deuxième surface de la préforme principale,
   - le premier axe longitudinal de la préforme principale est parallèle aux deuxièmes axes longitudinaux des préformes en L,
- une sous-étape de traitement thermique consistant à traiter thermiquement les préformes assemblées dans la sous-étape d'assemblage.

Ainsi, la fabrication de préformes réalisées en matériau composite et leur assemblage permet d'obtenir à moindre coût des éléments de liaison de manière rapide et simple. Les éléments de liaison ainsi fabriqués répondent aux exigences de contraintes des transferts d'efforts entre les ailes et le caisson central de voilure et les transferts d'efforts avec le fuselage de l'aéronef.

En outre, les préformes sont fabriquées de manière que la préforme principale présente des extrémités qui viennent à niveau avec les deuxièmes nappes des préformes en L quand les préformes sont assemblées, les préformes en L présentant des extrémités qui viennent à niveau entre elles.

Par ailleurs, la préforme principale présente des renforts continus parallèles au premier axe longitudinal et les préformes en L présentent des renforts continus parallèles au deuxième axe longitudinal.

Par ailleurs, l'étape d'assemblage comprend une sous-étape de couture suivant la sous-étape d'assemblage des préformes, la sous-étape de couture consistant à ajouter des fibres de renfort par couture pour solidariser les préformes les unes avec les autres.

En outre, l'étape de fabrication consiste à fabriquer les préformes par formage en continu.

De plus, la deuxième sous-étape de fabrication consiste à fabriquer la préforme en L par pultrusion, la deuxième sous-étape de fabrication comprenant :
- une sous-étape de fabrication en continu consistant à fabriquer en continu une bande en matériau composite formée d'une superposition de plis de fibres comprenant la première nappe et la deuxième nappe,
- une sous-étape de pliage en continu consistant à plier en continu la bande de manière que la première nappe soit perpendiculaire à la deuxième nappe afin de former le profilé en forme de L.

Par ailleurs, la deuxième sous-étape de fabrication comprend en outre une sous-étape de cintrage suivant la sous-étape de pliage, la sous-étape de cintrage consistant à courber le profilé en forme de L dans le sens du deuxième axe longitudinal de façon que la deuxième nappe soit courbée et que la première nappe reste plane.

Avantageusement, lors de la sous-étape de fabrication en continu, la bande est fabriquée de manière que la première nappe de la ou des préformes en L comprenne un ensemble de fibres présentant une direction faisant un angle non nul par rapport au deuxième axe longitudinal de la ou des préformes en L.

En outre, la sous-étape de fabrication en continu comprend une sous-étape d'incorporation de plis supplémentaires de fibres entre les plis de fibres de la bande en matériau composite, dans une zone de la bande correspondant à la première nappe après la sous-étape de pliage.

Par ailleurs, le procédé comprend en outre une étape de finition suivant l'étape d'assemblage, l'étape de finition comprenant :
- une sous-étape d'usinage de trous de fixation configuré pour fixer l'élément de liaison au moins au caisson central de voilure et à une aile de l'aéronef,
- une sous-étape d'usinage de fentes d'insertion configurées pour insérer des nervures d'alignement agencées sur le caisson central de voilure et sur l'aile.

Avantageusement, le traitement thermique correspond à une copolymérisation ou une co-consolidation.

L'invention concerne également un élément de liaison configuré pour participer à la liaison entre un caisson central de voilure et une aile d'aéronef.

Selon l'invention, l'élément de liaison comprend au moins cinq préformes en matériau composite assemblées par traitement thermique dont :
- une préforme principale en forme de bande présentant un premier axe longitudinal et
- quatre préformes en L dont une première préforme en L, une deuxième préforme en L, une troisième préforme en L et une quatrième préforme en L, chaque préforme en L correspondant à un profilé présentant un deuxième axe longitudinal dont la section transversale présente une forme de L comprenant une première nappe perpendiculaire à une deuxième nappe, les préformes étant assemblées pour que l'élément de liaison formé par les préformes présente une section transversale cruciforme en faisant en sorte que :
   - la première nappe de la première préforme en L soit accolée à la première nappe de la deuxième préforme en L,
   - la deuxième nappe de la première préforme en L et la deuxième nappe de la deuxième préforme en L soient accolées à la première surface de la préforme principale,
   - la première nappe de la troisième préforme en L soit accolée à la première nappe de la quatrième préforme en L,
   - la deuxième nappe de la troisième préforme en L et la deuxième nappe de la quatrième préforme en L soient accolées à la deuxième surface de la préforme principale,
   - le premier axe longitudinal de la préforme principale soit parallèle aux deuxièmes axes longitudinaux des préformes en L.

L'invention concerne aussi un aéronef comprenant des ailes et un caisson central de voilure fixés entre eux par l'intermédiaire d'au moins un élément de liaison tel spécifié ci-dessus.

### BRÈVE DESCRIPTION DES FIGURES

L'invention, avec ses caractéristiques et avantages, ressortira plus clairement à la lecture de la description faite en référence aux dessins annexés dans lesquels :
La figure 1 représente un schéma synoptique d'un mode de mise en oeuvre du procédé de fabrication,
La figure 2 représente une vue en perspective d'un aéronef dont une portion de fuselage de l'aéronef comprenant un caisson central de voilure est représenté en format agrandi,
La figure 3 représente une vue éclatée d'une jonction de base comprenant des éléments de liaison,
La figure 4a représente une coupe transversale d'un élément de liaison en croix dont les préformes sont séparées les unes des autres,
La figure 4b représente une vue en perspective d'une portion d'un élément de liaison en croix dont les préformes sont assemblées,
La figure 5a représente une coupe transversale d'un élément de liaison en T dont les préformes sont séparées les unes des autres, selon une première configuration,
La figure 5b représente une vue en perspective d'une portion d'un élément de liaison en T dont les préformes sont assemblées, selon la première configuration de la figure 4a,
La figure 6a représente une coupe transversale d'un élément de liaison en T dont les préformes sont séparées les unes des autres, selon une deuxième configuration,
La figure 6b représente une vue en perspective d'une portion d'un élément de liaison dont les préformes sont assemblées, selon la deuxième configuration de la figure 5a,
La figure 7a représente une vue en coupe d'un moule insérant un élément de liaison en croix selon une première configuration,
La figure 7b représente une vue en coupe d'un moule insérant un élément de liaison en croix selon une deuxième configuration,
La figure 7c représente une vue en coupe d'un moule insérant un élément de liaison en croix selon une troisième configuration,
La figure 8 représente une vue éclatée d'une jonction de base comprenant des préformes formant des éléments de liaison,
La figure 9 représente une coupe transversale d'un caisson central de voilure auquel est fixée une aile par des éléments de liaison,
La figure 10 représente une coupe transversale d'un élément de liaison en croix dont les préformes formant l'élément de liaison sont rendues solidaires les unes avec les autres par ajout de fibres de renfort par couture,
La figure 11 représente un élément de liaison en T assemblé.

### DESCRIPTION DÉTAILLÉE

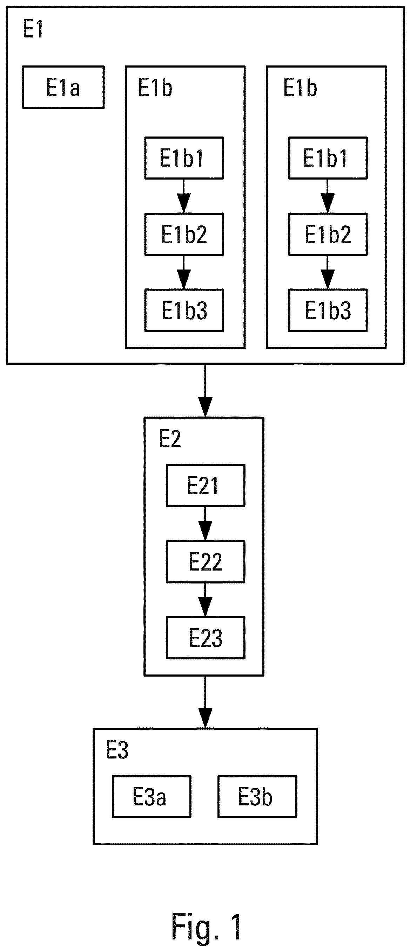

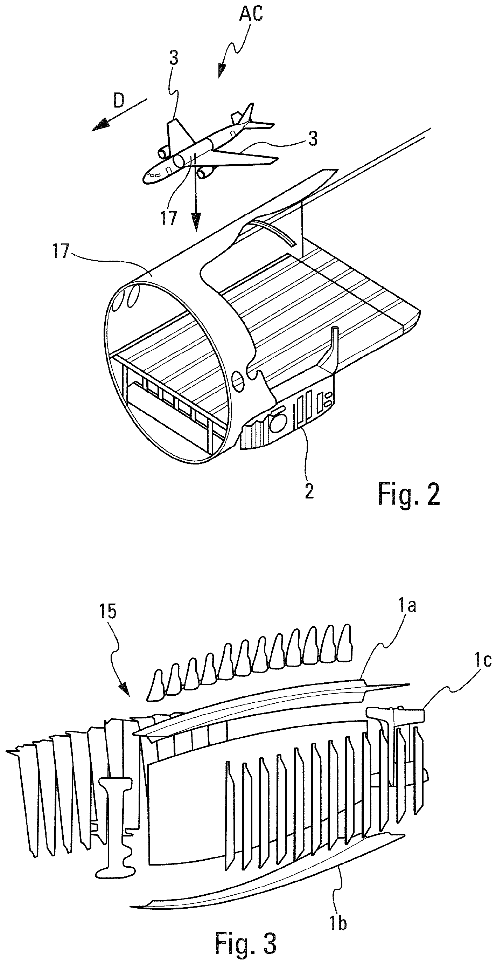

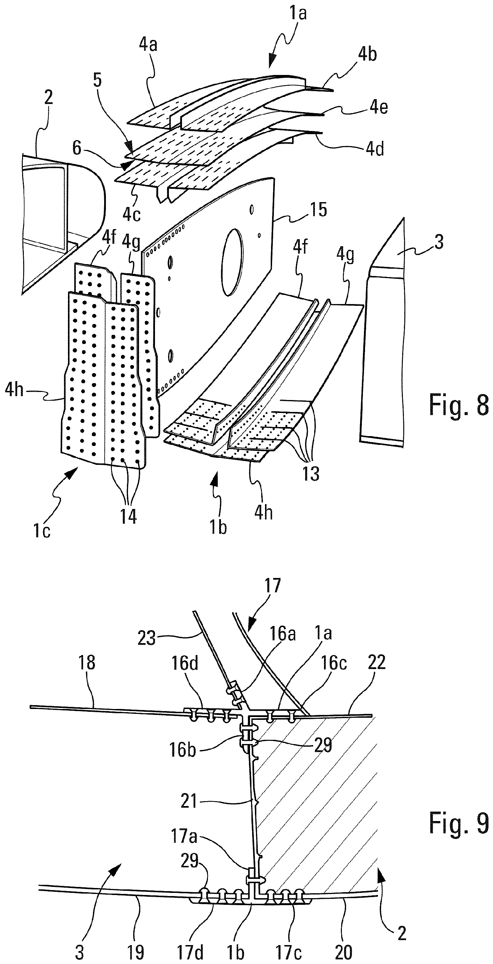

La figure 1 représente le procédé de fabrication d'un élément de liaison 1a, 1b, 1c configuré pour participer à la liaison entre un caisson central de voilure 2 d'un aéronef AC, en particulier d'un avion de transport, et une aile 3 de l'aéronef AC (figure 2 et figure 9).

Le procédé de fabrication comprend une étape E1 de fabrication d'au moins deux préformes 4a, 4b, 4c, 4d, 4e, 4f, 4g, 4h en matériau composite formant l'élément de liaison 1a, 1b, 1c et une étape E2 d'assemblage des préformes 4a, 4b, 4c, 4d, 4e, 4f, 4g, 4h par traitement thermique pour former l'élément de liaison 1a, 1b, 1c.

De façon non limitative, le matériau composite comprend au moins une matrice, telle qu'une résine thermodurcissable ou thermoplastique, associée à des renforts, tels que des fibres de carbone ou de verre.

Le matériau composite permet au moins de réduire la masse de l'aéronef AC, de réduire les opérations d'usinage et de finition par rapport à des éléments de liaison métalliques forgés, d'éliminer la corrosion, d'éliminer d'éventuels effets diélectriques et d'éliminer l'usure propre au métal.

Selon un mode de réalisation, le traitement thermique peut correspondre à une copolymérisation ou une cocuisson (« co-curing » en anglais) qui permet de copolymériser les préformes 4a, 4b, 4c, 4d, 4e, 4f, 4g, 4h. La copolymérisation est adaptée au matériau composite de type résines thermodurcissables.

Selon un autre mode de réalisation, le traitement thermique peut correspondre à une co-consolidation qui permet de co-consolider les préformes 4a, 4b, 4c, 4d, 4e, 4f, 4g, 4h. La co-consolidation est adaptée aux matériaux composites de type résines thermoplastiques.

L'étape E1 de fabrication peut comprendre une sous-étape E1a de fabrication consistant à fabriquer une préforme principale 4e, 4h en forme de bande qui présente un premier axe longitudinal (non représenté) et qui présente une surface 5 et une surface 6 opposée à la première surface 5. La figure 1 représente un mode de mise en oeuvre du procédé de fabrication d'un élément de liaison 1b, 1c en T dans lequel deux sous-étapes E1b de fabrication sont mises en oeuvre et une sous-étape E1a de fabrication. Toutefois, on comprendra que le nombre de sous-étapes E1b de fabrication ainsi que le nombre de sous-étapes E1a de fabrication dépendent de la forme de l'élément de liaison que l'on souhaite fabriquer.

L'étape E1 de fabrication peut comprendre également au moins une sous-étape E1b de fabrication consistant à fabriquer au moins une préforme 4a, 4b, 4c, 4d, 4f, 4g en L. La préforme 4a, 4b, 4c, 4d, 4f, 4g en L correspond à un profilé présentant un deuxième axe longitudinal (non représenté). La section transversale de la préforme 4a, 4b, 4c, 4d, 4f, 4g en L possède en outre une forme de L comprenant une première nappe 7a, 8a, 9a, 10a, 11a, 12a perpendiculaire à une deuxième nappe 7b, 8b, 9b, 10b, 11b, 12b. De plus, la première nappe 7a, 8a, 9a, 10a, 11a, 12a peut posséder la même longueur pour chacune des préformes en L 4a, 4b, 4c, 4d, 4f, 4g.

De manière avantageuse, les préformes 4a, 4b, 4c, 4d, 4e, 4f, 4g, 4h sont fabriquées de manière que la préforme principale 4e, 4h présente des extrémités qui viennent à niveau avec les deuxièmes nappes 7b, 8b, 9b, 10b, 11b, 12b des préformes en L 4a, 4b, 4c, 4d, 4f, 4g quand les préformes 4a, 4b, 4c, 4d, 4e, 4f, 4g, 4h sont assemblées. Par ailleurs, les préformes en L 4a, 4b, 4c, 4d, 4f, 4g peuvent également présenter des extrémités qui viennent à niveau entre elles.

Avantageusement, la sous-étape E1a comprend la fabrication d'une préforme principale 4e, 4h et la sous-étape E1b comprend la fabrication d'au moins deux préformes 4a, 4b, 4c, 4d, 4f, 4g en L destinées à être adjacentes l'une de l'autre.

L'étape E2 d'assemblage comprend alors au moins l'assemblage par traitement thermique :
- de la deuxième nappe 7b, 8b, 9b, 10b, 11b, 12b des au moins deux préformes en L 4a, 4b, 4c, 4d, 4f, 4g à la première surface 5 de la préforme principale 4e, 4h,
- de la première nappe 7a, 8a, 9a, 10a, 11a, 12a de l'une des deux préformes en L 4a, 4b, 4c, 4d, 4f, 4g à la première nappe 7a, 8a, 9a, 10a, 11a, 12a de l'autre des deux préformes en L 4a, 4b, 4c, 4d, 4f, 4g.

Cet assemblage permet ainsi de sceller toutes les surfaces des préformes pour former un élément de liaison 1a, 1b, 1c solide : les premières nappes 7a, 8a, 9a, 10a, 11a, 12a sont scellées entre elles et les deuxièmes nappes 7b, 8b, 9b, 10b, 11b, 12b sont scellées à la préforme principale 4e, 4h. Cela permet de renforcer la structure monobloc de l'élément de liaison 1a, 1b, 1c.

Les renforts, tels que des fibres, compris dans les préformes peuvent être continus sur toute leur longueur. Ainsi, la préforme principale 4e, 4h présente des renforts continus parallèles au premier axe longitudinal et les préformes en L 4a, 4b, 4c, 4d, 4f, 4g présentent des renforts continus parallèles au deuxième axe longitudinal. Ainsi, les renforts de la préforme principale 4a, 4h permettent un transfert des efforts depuis les ailes 3 de l'aéronef AC. Grâce à la continuité des renforts des premières nappes 7a, 8a, 9a, 10a, 11a, 12a des préformes en L 4a, 4b, 4c, 4d, 4f, 4g aux deuxièmes nappes 7b, 8b, 9b, 10b, 11b, 12b, les efforts sont transmis des premières nappes vers les deuxièmes nappes.

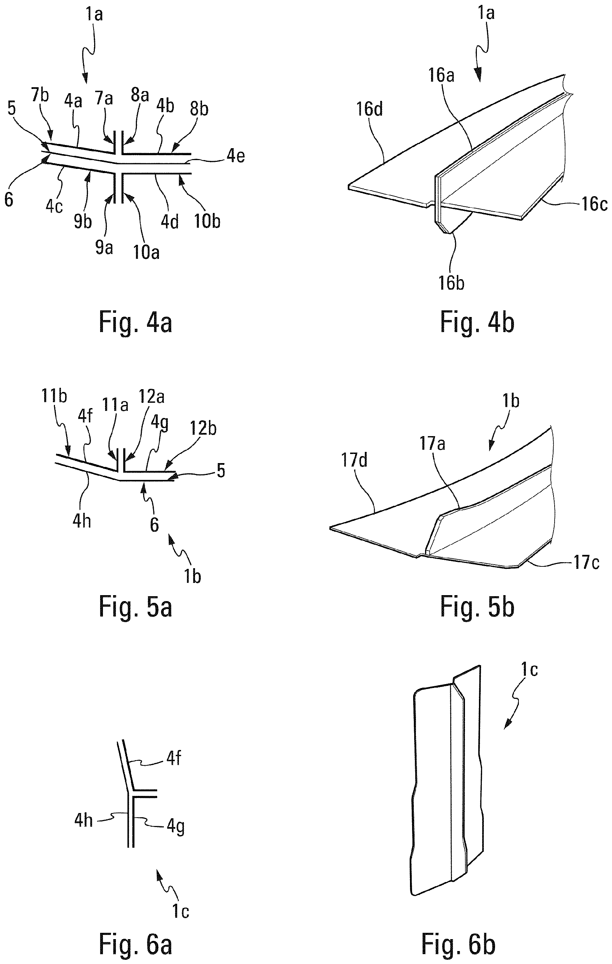

L'élément de liaison 1a, 1b, 1c de la jonction de base 15 (figure 3) permettant la fixation d'une aile 3 d'aéronef AC au caisson central de voilure 2 peut posséder une section transversale d'au moins deux formes : une forme en croix à quatre branches (pour un élément de liaison en croix) ou cruciforme comme représenté sur les figures 4a et 4b et une forme en T (pour un élément de liaison en T) qui ne relève pas de l'invention mais qui est présent seulement à titre illustratif comme représenté sur les figures 5a, 5b, 6a et 6b.

De façon non limitative, la jonction de base 15 comprend au moins un élément de liaison 1b, 1c en T qui ne relève pas de l'invention et un élément de liaison 1a en croix.

L'élément de liaison 1a en croix peut être utilisé pour participer à la liaison d'une aile 3 d'aéronef AC au caisson central de voilure 2 de la manière suivante (figure 4b). Une branche 16d de la croix de l'élément de liaison 1a en croix peut être fixée sur une surface 18 de l'extrados de l'aile 3. Une branche 16c de la croix opposée à la branche 16d de la croix peut être fixée sur une surface 22 du caisson central de voilure 2 qui est dans le prolongement de la surface 18 de l'extrados de l'aile 3. Une branche 16a de la croix peut être fixée sur la surface 23 du fuselage 17 de l'aéronef AC. La branche 16b de la croix peut être fixée sur une surface 21 du caisson central de voilure 2 sensiblement perpendiculaire à la surface 22 du caisson central de voilure 2.

Un élément de liaison 1b en T, qui peut participer à la liaison d'une aile 3 d'aéronef AC au caisson central de voilure 2, peut être fixé de la manière suivante (figure 5b, 6b). Une branche 17d de la barre horizontale du T peut être fixée sur la surface 19 intrados de l'aile 3. La branche 17c de la barre horizontale du T peut être fixée sur une surface 20 du caisson central de voilure 2 qui est dans le prolongement de la surface 19 intrados de l'aile 3. La branche verticale 17a du T peut être fixée sur la surface 21 du caisson central de voilure 2.

Ainsi, chaque préforme possède une fonction de transfert d'effort spécifique.

D'autres éléments de liaison en croix ou en T 1c peuvent être utilisés pour participer à la liaison d'une aile 3 au caisson central de voilure 2.

Selon un premier mode de mise en oeuvre du procédé, l'étape E1 de fabrication d'un élément de liaison 1a en croix comprend une sous-étape E1a de fabrication consistant à fabriquer une préforme principale 4e et quatre sous-étapes E1b de fabrication consistant à fabriquer respectivement une préforme 4a en L, une préforme 4b en L, une préforme 4c en L et une préforme 4d en L.

L'étape E2 d'assemblage comprend une sous-étape E21 d'assemblage des préformes consistant à assembler les préformes 4a, 4b, 4c, 4d, 4e fabriquées dans les sous-étapes E1a, E1b de fabrication.

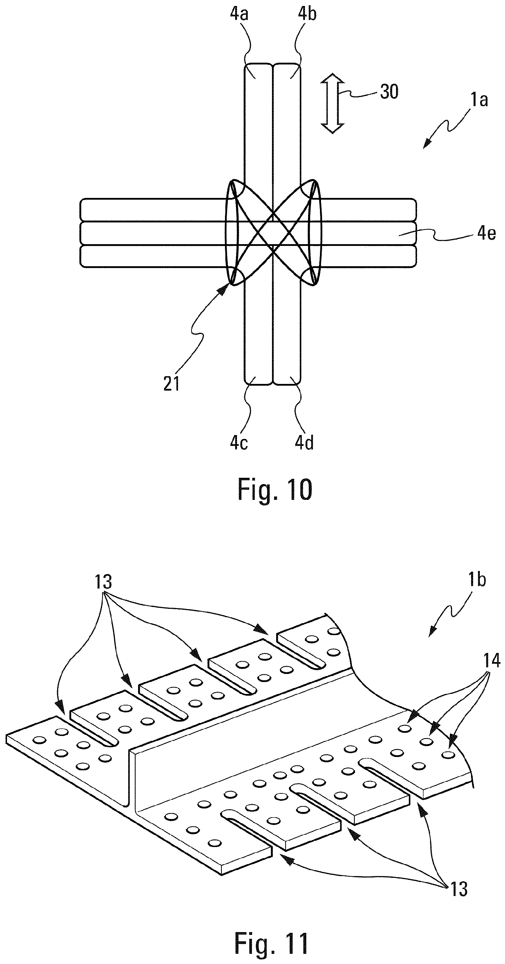

L'étape E2 d'assemblage peut comprendre en outre une sous-étape E22 de couture qui suit la sous-étape E21 d'assemblage des préformes. La sous-étape E22 de couture consiste à ajouter des fibres de renfort 21 par couture pour solidariser les préformes 4a, 4b, 4c, 4d, 4e les unes avec les autres (figure 10).

L'étape E2 d'assemblage comprend également une étape E23 de traitement thermique consistant à traiter thermiquement les préformes 4a, 4b, 4c, 4d, 4e assemblées dans la sous-étape E21 d'assemblage.

Les préformes 4a, 4b, 4c, 4d, 4e sont assemblées, dans la sous-étape E21 d'assemblage, pour que l'élément de liaison 1a formé par les préformes 4a, 4b, 4c, 4d, 4e présente une section transversale cruciforme (figure 4a) en faisant en sorte que :
- la nappe 7a de la préforme 4a en L soit accolée à la nappe 8a de la préforme 4b en L,
- la nappe 7b de la première préforme 4a en L et la nappe 8b de la préforme 4b en L soient accolées à la surface 5 de la préforme principale 4e,
- la nappe 9a de la préforme 4c en L soit accolée à la nappe 10a de la préforme 4d en L,
- la nappe 9b de la préforme 4c en L et la nappe 10b de la préforme 4d en L soient accolées à la surface 6 de la préforme principale 4e,
- le premier axe longitudinal de la préforme principale 4e est parallèle aux deuxièmes axes longitudinaux des préformes 4a, 4b, 4c, 4d en L.

La nappe 7a de la préforme 4a en L accolée à la nappe 8a de la préforme 4b en L forment ensemble la branche 16a de la croix.

La nappe 9a de la préforme 4c en L accolée à la nappe 10a de la préforme 4d en L forment ensemble la branche 16b de la croix.

La nappe 7b de la préforme 4a en L et la nappe 8b de la préforme 4b en L accolée à la surface 5 de la préforme principale 4e et la nappe 9b de la préforme 4c en L et la nappe 10b de la préforme 4d en L accolée à la surface 6 de la préforme principale 4e forment ensemble respectivement la branche 16d et la branche 16c de la croix.

Selon un deuxième mode de mise en oeuvre du procédé qui ne relève pas de l'invention et est présent à titre seulement illustratif, l'étape E1 de fabrication d'un élément de liaison 1b, 1c en T peut comprendre une sous-étape E1a de fabrication consistant à fabriquer une préforme principale 4h et deux sous-étapes E1b de fabrication consistant à fabriquer respectivement une préforme 4f en L et une préforme 4g en L.

L'étape E2 d'assemblage peut comprendre une sous-étape E21 d'assemblage des préformes 4f, 4g, 4h consistant à assembler les préformes 4f, 4g, 4h fabriquées dans les sous-étapes E1a, E1b de fabrication.

L'étape E2 d'assemblage peut comprendre en outre une sous-étape E22 de couture qui suit la sous-étape E21 d'assemblage des préformes. La sous-étape E22 de couture consiste à ajouter des fibres de renfort 21 par couture pour solidariser les préformes 4f, 4g, 4h les unes avec les autres (figure 10).

L'étape E2 d'assemblage peut comprendre également une étape E23 de traitement thermique consistant à traiter thermiquement les préformes 4f, 4g, 4h assemblées dans la sous-étape E21 d'assemblage.

Les préformes 4f, 4g, 4h sont assemblées, dans la sous-étape E21 d'assemblage, pour que l'élément de liaison 1b, 1c formé par les préformes 4f, 4g, 4h présente une section transversale en forme de T (figure 5a, 6a) en faisant en sorte que :
- la nappe 11a de la préforme 4f en L soit accolée à la nappe 12a de la préforme 4g en L,
- la nappe 11b de la préforme 4f en L et la nappe 12b de la préforme 4g en L soient accolées à la surface 5 de la préforme principale 4h,
- le premier axe longitudinal de la préforme principale 4h est parallèle aux deuxièmes axes longitudinaux des préformes 4f, 4g en L.

La nappe 11a de la préforme 4f en L accolée à la nappe 12a de la préforme 4g en L forment ensemble la branche verticale 17a du T.

La nappe 11b de la préforme 4f en L et la nappe 12b de la préforme 4g en L accolées à la surface 5 de la préforme principale 4h forment la barre transversale du T.

Avantageusement, les préformes 4a, 4b, 4c, 4d, 4e, 4f, 4g, 4h en L et en T fabriquées dans l'étape E1 de fabrication sont fabriquées par formage en continu. La fabrication des préformes 4a, 4b, 4c, 4d, 4e, 4f, 4g, 4h par formage en continu peut être une fabrication par extrusion ou par pultrusion.

Avantageusement, la sous-étape E1b de fabrication consiste à fabriquer les préformes 4a, 4b, 4c, 4d, 4f, 4g en L par pultrusion.

Pour cela, la sous-étape E1b de fabrication peut comprendre :
- une sous-étape E1b1 de fabrication en continu consistant à fabriquer en continu une bande en matériau composite formée d'une superposition de plis de fibres comprenant la nappe 7a, 8a, 9a, 10a, 11a, 12a et la nappe 7b, 8b, 9b, 10b, 11b, 12b,
- une sous-étape E1b2 de pliage en continu consistant à plier en continu la bande de manière que la nappe 7a, 8a, 9a, 10a, 11a, 12a soit perpendiculaire à la nappe 7b, 8b, 9b, 10b, 11b, 12b afin de former le profilé 4a, 4b, 4c, 4d, 4f, 4g en forme de L.

La sous-étape E1b1 de fabrication en continu peut être réalisée par un procédé de placement de fibres automatique AFP (« Automated Fiber Placement » en anglais).

La sous-étape E1b2 de pliage peut être réalisée par un dispositif permettant le pliage progressif en continu de la bande jusqu'à ce que la bande présente une pliure selon un angle sensiblement égal à 90°.

De préférence, l'angle externe de la pliure correspond à un angle vif, c'est-à-dire, l'angle externe de la pliure présente une courbure sensiblement égale à 0°, ou proche de 0°.

Pour cela, la sous-étape E1b1 de fabrication en continu peut comprendre une sous-étape (non représentée) d'incorporation de plis supplémentaires de fibres entre les plis de fibres de la bande en matériau composite, dans une zone de la bande correspondant à la nappe 7a, 8a, 9a, 10a, 11a, 12a après la sous-étape E1b2 de pliage en continu.

La sous-étape E1b de fabrication peut comprendre en outre une sous-étape E1b3 de cintrage suivant la sous-étape E1b2 de pliage en continu. La sous-étape E1b3 de cintrage revient à courber le profilé en forme de L dans le sens du deuxième axe longitudinal de façon que la nappe 7b, 8b, 9b, 10b, 11b, 12b soit courbée et que la nappe 7a, 8a, 9a, 10a, 11a, 12a reste plane. Cette courbure permet de tenir compte de la courbure du profil d'aile 3 partant de l'avant vers l'arrière dans le sens de déplacement D de l'aéronef AC.

Le cintrage peut être réalisé après le pliage en déposant le profilé en forme de L sur un banc courbé afin que le profilé en forme de L suive le banc pour qu'il prenne la courbure du banc.

De préférence, lors de la sous-étape E1b1 de fabrication en continu, la bande est fabriquée de manière que la première nappe 7a, 8a, 9a, 10a, 11a, 12a de la ou des préformes 4a, 4b, 4c, 4d, 4f, 4g en L comprenne un ensemble de fibres présentant une direction faisant un angle non nul par rapport au deuxième axe longitudinal de la ou des préformes 4a, 4b, 4c, 4d, 4f, 4g.

De manière non limitative, l'ensemble de fibres comprend un sous-ensemble de fibre dont la direction est perpendiculaire au deuxième axe longitudinal, un sous-ensemble de fibres dont la direction est sensiblement égale à 30° par rapport au deuxième axe longitudinal et un ensemble de fibres dont la direction est sensiblement égale à -30° par rapport au deuxième axe longitudinal.

Dans l'étape E2 d'assemblage, la sous-étape E22 de couture peut être mise en oeuvre, si nécessaire, en cas d'efforts transverses 30 importants sur l'élément de liaison 1a, 1b, 1c. La double flèche 30 représentée sur la figure 10 indique un exemple de direction et de sens d'efforts transverses pouvant s'appliquer sur un élément de liaison 1a. Avantageusement, les fibres de renfort 21 sont ajoutées par couture dans une zone centrale aux préformes 4a, 4b, 4c, 4d, 4f, 4g. Par exemple, la couture suit la ligne de liaison entre le première nappe 7a, 8a, 9a, 10a, 11a, 12a et la deuxième nappe 7b, 8b, 9b, 10b, 11b, 12b.

De façon non limitative, les fibres de renfort 21 correspondent à des fibres de carbone ou des fibres de verre.

La sous-étape E23 de traitement thermique permet de traiter thermiquement toutes les préformes 4a, 4b, 4c, 4d, 4e, 4f, 4g, 4h assemblées dans la sous-étape E21 d'assemblage et de les rendre solidaires les unes des autres. Comme expliqué précédemment dans la description, le traitement thermique peut correspondre à une copolymérisation ou une co-consolidation.

La copolymérisation ou la co-consolidation peut correspondre à un thermo-durcissement de la résine du matériau composite dans un autoclave.

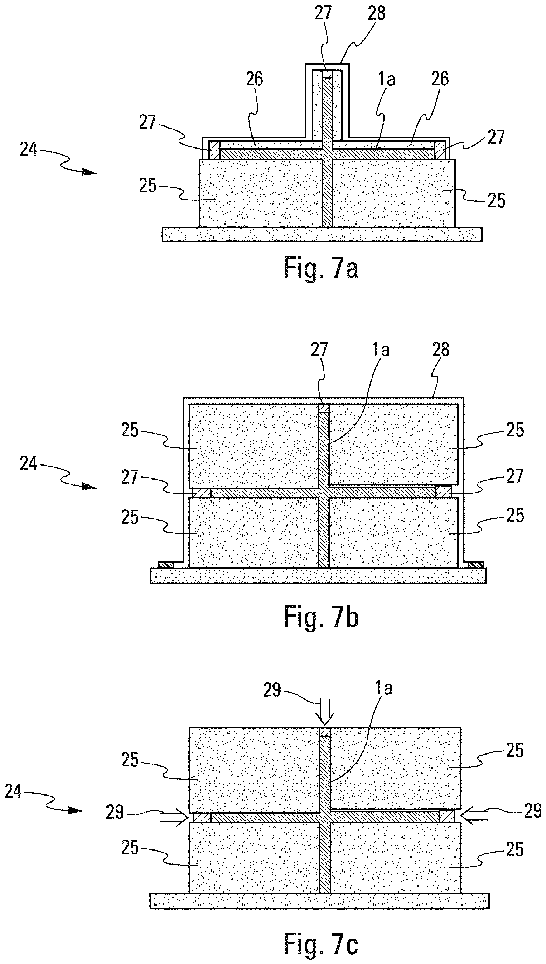

La sous-étape E23 de traitement thermique peut être réalisée au moyen d'un moule 24 dans lequel les préformes 4a, 4b, 4c, 4d, 4e, 4f, 4g, 4h assemblées dans la sous-étape E21 d'assemblage sont insérées. Les figures 7a, 7b, et 7c représentent chacune un moule 24 insérant un élément de liaison 1a en croix. Mais, on comprend qu'un moule adapté peut insérer un élément de liaison 1b, 1c en T.

Selon un premier mode de réalisation (figure 7a), le moule 24 peut comprendre des plaques de conformation métalliques 25 complétées par des plaques de conformation souples 26. Les ouvertures du moule sont fermées par des barres de bord 27 (« edge bar » en anglais). Le tout est enfermé dans un sac 28 avant l'application d'une pression par autoclave.

Selon un deuxième mode de réalisation préféré (figure 7b), le moule 24 comprend seulement des plaques de conformation métalliques 25 dont les ouvertures sont fermées par des barres de bord 27. Comme pour le premier mode de réalisation, le tout est enfermé dans un sac 28 avant l'application d'une pression par autoclave.

Selon un troisième mode de réalisation (figure 7c), le moule 24 comprend seulement des plaques de conformation métalliques 25. Une pression 29 est appliquée par les ouvertures du moule par une technique de moulage par injection basse pression de résine de même qualité (SQRTM pour « Same Quality Resin Transfer Moulding » en anglais). Dans ce mode de réalisation, le sac et l'autoclave ne sont pas requis.

Le procédé de fabrication peut comprendre en outre une étape E3 de finition suivant l'étape d'assemblage.

L'étape E3 de finition comprend :
- une sous-étape E3a d'usinage de trous de fixation 14 (figures 8 et 11) configuré pour fixer l'élément de liaison 1a, 1b, 1c au caisson central de voilure 2 et à une aile 3 de l'aéronef AC,
- une sous-étape E3b d'usinage de fentes d'insertion 13 (figures 8 et 11) configurées pour insérer des nervures d'alignement agencées sur le caisson central de voilure 2 et/ou sur l'aile 3.

Les nervures d'alignement peuvent correspondre à des raidisseurs de panneau agencés sur le caisson central de voilure 2 et/ou sur l'aile 3.

Ainsi, les éléments de liaison 1a, 1b, 1c peuvent être alignés grâce aux fentes d'insertion 13 et peuvent être fixés au caisson central de voilure 2, au fuselage 17 et à l'aile 3 à l'aide de dispositifs de fixation tels que des vis et écrous 29 ou de rivets insérés dans les trous de fixations 14.

## Revendications

1. Procédé de fabrication d'un élément de liaison (1a) configuré pour participer à la liaison entre un caisson central de voilure (2) d'un aéronef (AC) et une aile (3) de l'aéronef (AC),
le procédé comprenant l'ensemble des étapes suivantes :
- une étape (E1) de fabrication de préformes (4a, 4b, 4c, 4d, 4e) en matériau composite formant l'élément de liaison (1a) ;
- une étape (E2) d'assemblage des préformes (4a, 4b, 4c, 4d, 4e) par traitement thermique pour former l'élément de liaison (1a),
**caractérisé en ce que** l'étape de (E1) de fabrication de préformes (4a, 4b, 4c, 4d, 4e) correspond à une étape (E1) de fabrication de cinq préformes (4a, 4b, 4c, 4d, 4e),
et **en ce que** l'étape (E1) de fabrication comprend :
- une première sous-étape (E1a) de fabrication consistant à fabriquer une préforme principale (4e) en forme de bande présentant un premier axe longitudinal et présentant une première surface (5) opposée à une deuxième surface (6) et
- quatre deuxièmes sous-étapes (E1b) de fabrication consistant à fabriquer une première préforme en L (4a), une deuxième préforme en L (4b), une troisième préforme en L (4c) et une quatrième préforme en L (4d), chaque préforme en L correspondant à un profilé présentant un deuxième axe longitudinal dont la section transversale présente une forme de L comprenant une première nappe (7a, 8a, 9a, 10a) perpendiculaire à une deuxième nappe (7b, 8b, 9b, 10b), et **en ce que** l'étape (E2) d'assemblage comprend :
- une sous-étape (E21) d'assemblage des préformes consistant à assembler les préformes (4a, 4b, 4c, 4d, 4e) fabriquées dans la première sous-étape (E1a) de fabrication et les deuxièmes sous-étapes (E1b) de fabrication, les préformes (4a, 4b, 4c, 4d, 4e) étant assemblées pour que l'élément de liaison (1a) formé par les préformes (4a, 4b, 4c, 4d, 4e) présente une section transversale cruciforme en faisant en sorte que :
• la première nappe (7a) de la première préforme en L (4a) soit accolée à la première nappe (8a) de la deuxième préforme en L (4b),
• la deuxième nappe (7b) de la première préforme en L (4a) et la deuxième nappe (8b) de la deuxième préforme en L (4b) soient accolées à la première surface (5) de la préforme principale (4e),
• la première nappe (9a) de la troisième préforme en L (4c) soit accolée à la première nappe (10a) de la quatrième préforme en L (4d),
• la deuxième nappe (9b) de la troisième préforme en L (4c) et la deuxième nappe (10b) de la quatrième préforme en L (4d) soient accolées à la deuxième surface (6) de la préforme principale (4e),
• le premier axe longitudinal de la préforme principale (4e) est parallèle aux deuxièmes axes longitudinaux des préformes en L (4a, 4b, 4c, 4d),
- une sous-étape (E23) de traitement thermique consistant à traiter thermiquement les préformes (4a, 4b, 4c, 4d, 4e) assemblées dans la sous-étape (E21) d'assemblage.

2. Procédé selon la revendication 1,
**caractérisé en ce que** les préformes (4a, 4b, 4c, 4d, 4e) sont fabriquées de manière que la préforme principale (4e) présente des extrémités qui viennent à niveau avec les deuxièmes nappes (7b, 8b, 9b, 10b) des préformes en L (4a, 4b, 4c, 4d) quand les préformes (4a, 4b, 4c, 4d, 4e) sont assemblées, les préformes en L (4a, 4b, 4c, 4d) présentant des extrémités qui viennent à niveau entre elles.

3. Procédé selon l'une quelconque des revendications 1 ou 2,
**caractérisé en ce que** la préforme principale (4e, 4h) présente des renforts continus parallèles au premier axe longitudinal et les préformes en L (4a, 4b, 4c, 4d) présentent des renforts continus parallèles au deuxième axe longitudinal.

4. Procédé selon l'une quelconque des revendications 1 à 3,
**caractérisé en ce que** l'étape (E2) d'assemblage comprend en outre une sous-étape (E22) de couture suivant la sous-étape (E21) d'assemblage des préformes, la sous-étape (E22) de couture consistant à ajouter des fibres de renfort (21) par couture pour solidariser les préformes les unes avec les autres.

5. Procédé selon l'une quelconque des revendications 1 à 4,
**caractérisé en ce que** l'étape (E1) de fabrication consiste à fabriquer les préformes (4a, 4b, 4c, 4d, 4e, 4f, 4g, 4h) par formage en continu.

6. Procédé selon l'une quelconque des revendications 1 à 3,
**caractérisé en ce que** la deuxième sous-étape (E1b) de fabrication consiste à fabriquer la préforme en L (4a, 4b, 4c, 4d) par pultrusion, la deuxième sous-étape (E1b) de fabrication comprenant :
- une sous-étape (E1b1) de fabrication en continu consistant à fabriquer en continu une bande en matériau composite formée d'une superposition de plis de fibres comprenant la première nappe (7a, 8a, 9a, 10a) et la deuxième nappe (7b, 8b, 9b, 10b),
- une sous-étape (E1b2) de pliage en continu consistant à plier en continu la bande de manière que la première nappe (7a, 8a, 9a, 10a) soit perpendiculaire à la deuxième nappe (7b, 8b, 9b, 10b) afin de former le profilé en forme de L.

7. Procédé selon la revendication 6,
**caractérisé en ce que** la deuxième sous-étape (E1b) de fabrication comprend en outre une sous-étape (E1b3) de cintrage suivant la sous-étape (E1b2) de pliage en continu, la sous-étape (E1b3) de cintrage consistant à courber le profilé en forme de L dans le sens du deuxième axe longitudinal de façon que la deuxième nappe (7b, 8b, 9b, 10b, 11b, 12b) soit courbée et que la première nappe (7a, 8a, 9a, 10a, 11a, 12a) reste plane.

8. Procédé selon la revendication 6,
**caractérisé en ce que**, lors de la sous-étape (E1b1) de fabrication en continu, la bande est fabriquée de manière que la première nappe (7a, 8a, 9a, 10a, 11a, 12a) de la ou des préformes en L (4a, 4b, 4c, 4d, 4f, 4g) comprenne un ensemble de fibres présentant une direction faisant un angle non nul par rapport au deuxième axe longitudinal de la ou des préformes en L (4a, 4b, 4c, 4d, 4f, 4g).

9. Procédé selon la revendication 6,
**caractérisé en ce que** la sous-étape (E1b1) de fabrication en continu comprend une sous-étape d'incorporation de plis supplémentaires de fibres entre les plis de fibres de la bande en matériau composite, dans une zone de la bande correspondant à la première nappe (7a, 8a, 9a, 10a, 11a, 12a) après la sous-étape de pliage.

10. Procédé selon l'une quelconque des revendications 1 à 9,
**caractérisé en ce qu'**il comprend en outre une étape (E3) de finition suivant l'étape d'assemblage, l'étape (E3) de finition comprenant :
- une sous-étape (E3a) d'usinage de trous de fixation (14), les trous de fixation (14) étant configurés pour fixer l'élément de liaison (1a, 1b, 1c) au moins au caisson central de voilure (2) et à l'aile (3) de l'aéronef (AC),
- une sous-étape (E3b) d'usinage de fentes d'insertion (13) configurées pour insérer des nervures d'alignement agencées sur le caisson central de voilure (2) et sur l'aile (3).

11. Procédé selon l'une quelconque des revendications 1 à 10,
**caractérisé en ce que** le traitement thermique correspond à une copolymérisation ou une co-consolidation.

12. Élément de liaison configuré pour participer à la liaison entre un caisson central de voilure (2) et une aile (3) d'aéronef (AC),
**caractérisé en ce qu'**il comprend au moins cinq préformes (4a, 4b, 4c, 4d, 4e) en matériau composite assemblées par traitement thermique, dont :
- une préforme principale (4e) en forme de bande présentant un premier axe longitudinal et
- quatre préformes en L (4a, 4b, 4c, 4d) dont une première préforme en L (4a), une deuxième préforme en L (4b), une troisième préforme en L (4c) et une quatrième préforme en L (4d), chaque préforme en L (4a, 4b, 4c, 4d) correspondant à un profilé présentant un deuxième axe longitudinal dont la section transversale présente une forme de L comprenant une première nappe (7a, 8a, 9a, 10a) perpendiculaire à une deuxième nappe (7b, 8b, 9b, 10b), les préformes (4a, 4b, 4c, 4d, 4e) étant assemblées pour que l'élément de liaison formé par les préformes (4a, 4b, 4c, 4d, 4e) présente une section transversale cruciforme en faisant en sorte que :
• la première nappe (7a) de la première préforme en L (4a) soit accolée à la première nappe (8a) de la deuxième préforme en L (4b),
• la deuxième nappe (7b) de la première préforme en L (4a) et la deuxième nappe (8b) de la deuxième préforme en L (4b) soient accolées à la première surface (5) de la préforme principale (4e),
• la première nappe (9a) de la troisième préforme en L (4c) soit accolée à la première nappe (10a) de la quatrième préforme en L (4d),
• la deuxième nappe (9b) de la troisième préforme en L (4c) et la deuxième nappe (10b) de la quatrième préforme en L (4d) soient accolées à la deuxième surface (6) de la préforme principale (4e),
• le premier axe longitudinal de la préforme principale (4e) soit parallèle aux deuxièmes axes longitudinaux des préformes en L (4a, 4b, 4c, 4d).

13. Aéronef comprenant des ailes (3) et un caisson central de voilure (2),
**caractérisé en ce que** les ailes (3) sont fixées au caisson central de voilure (2) par l'intermédiaire d'au moins un élément de liaison (1a, 1b, 1c) tel spécifié sous la revendication 12.

## Patentansprüche

1. Verfahren zur Herstellung eines Verbindungselements (1a), das konfiguriert ist, um sich an der Verbindung zwischen einem Zentralgehäuse eines Flügels (2) eines Luftfahrzeugs (AC) und einem Flügel (3) des Luftfahrzeugs (AC) zu beteiligen, wobei das Verfahren die Gesamtheit der folgenden Schritte umfasst:
- einen Schritt (E1) zur Herstellung von Vorformlingen (4a, 4b, 4c, 4d, 4e) aus Verbundwerkstoff zur Bildung des Verbindungselements (1a);
- einen Schritt (E2) zum Montieren der Vorformlinge (4a, 4b, 4c, 4d, 4e) durch Wärmebehandlung zur Bildung des Verbindungselements (1a),
**dadurch gekennzeichnet, dass** der Schritt (E1) zur Herstellung von Vorformlingen (4a, 4b, 4c, 4d, 4e) einem Schritt (E1) zur Herstellung von fünf Vorformlingen (4a, 4b, 4c, 4d, 4e) entspricht, und dadurch, dass der Schritt (E1) zur Herstellung umfasst:
- einen ersten Teilschritt (E1a) zur Herstellung, der darin besteht, einen Hauptvorformling (4e) in Form eines Bandes herzustellen, der eine erste Längsachse aufweist, und eine erste Oberfläche (5) gegenüber einer zweiten Oberfläche (6) aufweist, und
- vier zweite Teilschritte (E1b) zur Herstellung, die darin bestehen, einen ersten L-Vorformling (4a), einen zweiten L-Vorformling (4b), einen dritten L-Vorformling (4c) und einen vierten L-Vorformling (4d) herzustellen, wobei jeder L-Vorformling einem Profil entspricht, das eine zweite Längsachse aufweist, deren Querschnitt eine L-Form aufweist, die eine erste Decke (7a, 8a, 9a, 10a) senkrecht zu einer zweiten Decke (7b, 8b, 9b, 10b) umfasst, und dadurch, dass der Schritt (E2) zum Montieren umfasst:
- einen Teilschritt (E21) zum Montieren der Vorformlinge, der darin besteht, die Vorformlinge (4a, 4b, 4c, 4d, 4e), die in dem ersten Teilschritt (E1a) zur Herstellung und den zweiten Teilschritten (E1b) zur Herstellung hergestellt werden, zu montieren, wobei die Vorformlinge (4a, 4b, 4c, 4d, 4e) montiert werden, damit das Verbindungselement (1a), das durch die Vorformlinge (4a, 4b, 4c, 4d, 4e) gebildet wird, einen kreuzförmigen Querschnitt aufweist, indem dafür gesorgt wird, dass
- die erste Decke (7a) des ersten L-Vorformlings (4a) an die erste Decke (8a) des zweiten L-Vorformlings (4b) angeschlossen wird,
- die zweite Decke (7b) des ersten L-Vorformlings (4a) und die zweite Decke (8b) des zweiten L-Vorformlings (4b) an die erste Oberfläche (5) des Hauptvorformlings (4e) angeschlossen werden,
- die erste Decke (9a) des dritten L-Vorformlings (4c) an die erste Decke (10a) des vierten L-Vorformlings (4d) angeschlossen wird,
- die zweite Decke (9b) des dritten L-Vorfomlings (4c) und die zweite Decke (10b) des vierten L-Vorformlings (4d) an die zweite Oberfläche (6) des Hauptvorformlings (4e) angeschlossen werden,
- die erste Längsachse des Hauptvorformlings (4e) parallel zu den zweiten Längsachsen der L-Vorformlinge (4a, 4b, 4c, 4d) sind,
- ein Teilschritt (E23) zur Wärmebehandlung, der darin besteht, die in dem Teilschritt (E21) zum Montieren montierten Vorformlinge (4a, 4b, 4c, 4d, 4e) mit Wärme zu behandeln.

2. Verfahren nach Anspruch 1,
**dadurch gekennzeichnet, dass** die Vorformlinge (4a, 4b, 4c, 4d, 4e) derart hergestellt werden, dass der Hauptvorformling (4e) Enden aufweist, die auf Niveau mit den zweiten Decken (7b, 8b, 9b, 10b) der L-Vorformlinge (4a, 4b, 4c, 4d) kommen, wenn die Vorformlinge (4a, 4b, 4c, 4d, 4e) montiert sind, wobei die L-Vorfomlinge (4a, 4b, 4c, 4d) Enden aufweisen, die auf Niveau miteinander kommen.

3. Verfahren nach einem der Ansprüche 1 oder 2,
**dadurch gekennzeichnet, dass** der Hauptvorfomling (4e, 4h) parallele kontinuierliche Verstärkungen an der ersten Längsachse aufweist, und die L-Vorformlinge (4a, 4b, 4c, 4d) parallele kontinuierliche Verstärkungen an der zweiten Längsachse aufweisen.

4. Verfahren nach einem der Ansprüche 1 bis 3,
**dadurch gekennzeichnet, dass** der Schritt (E2) zum Montieren weiter einen Teilschritt (E22) zum Nähen nach dem Teilschritt (E21) zum Montieren der Vorformlinge umfasst, wobei der Teilschritt (E22) zum Nähen darin besteht, Verstärkungsfasern (21) durch Nähen beizubringen, um die Vorformlinge fest miteinander zu verbinden.

5. Verfahren nach einem der Ansprüche 1 bis 4,
**dadurch gekennzeichnet, dass** der Schritt (E1) zur Herstellung darin besteht, die Vorformlinge (4a, 4b, 4c, 4d, 4e, 4f, 4g, 4h) durch kontinuierliches Umformen herzustellen.

6. Verfahren nach einem der Ansprüche 1 bis 3,
**dadurch gekennzeichnet, dass** der zweite Teilschritt (E1b) zur Herstellung darin besteht, den L-Vorformling (4a, 4b, 4c, 4d) durch Strangziehen herzustellen, wobei der zweite Teilschritt (E1b) zur Herstellung umfasst:
- einen Teilschritt (E1 b1) zur kontinuierlichen Herstellung, der darin besteht, kontinuierlich ein Band aus Verbundwerkstoff herzustellen, das aus einer Überlagerung von Falten aus Fasern, die erste Decke (7a, 8a, 9a, 10a) und die zweite Decke (7b, 8b, 9b, 10b) umfassend, gebildet wird,
- einen Teilschritt (E1b2) zur kontinuierlichen Faltung, der darin besteht, das Band kontinuierlich zu falten, sodass die erste Decke (7a, 8a, 9a, 10a) senkrecht zur zweiten Decke (7b, 8b, 9b, 10b) ist, um das Profil in Form eines L zu bilden.

7. Verfahren nach Anspruch 6,
**dadurch gekennzeichnet, dass** der zweite Teilschritt (E1b) zur Herstellung weiter einen Teilschritt (E1b3) zum Biegen nach dem Teilschritt (E1b2) des kontinuierlichen Faltens umfasst, wobei der Teilschritt (E1b3) zum Biegen darin besteht, das Profil in Form eines L in Richtung der zweiten Längsachse zu krümmen, sodass die zweite Decke (7b, 8b, 9b, 10b, 11b, 12b) gekrümmt ist, und die erste Decke (7a, 8a, 9a, 10a, 11a, 12a) eben bleibt.

8. Verfahren nach Anspruch 6,
**dadurch gekennzeichnet, dass** beim Teilschritt (E1b1) zur kontinuierlichen Herstellung das Band derart hergestellt wird, dass die erste Decke (7a, 8a, 9a, 10a, 11a, 12a) des oder der L-Vorformlinge (4a, 4b, 4c, 4d, 4f, 4g) eine Montage an Fasern umfasst, die eine Richtung aufweist, die einen Winkel ungleich null in Bezug auf die zweite Längsachse des oder der L-Vorformlinge (4a, 4b, 4c, 4d, 4f, 4g) einschlägt.

9. Verfahren nach Anspruch 6,
**dadurch gekennzeichnet, dass** der Teilschritt (E1b1) zur kontinuierlichen Herstellung einen Teilschritt zur Einbeziehung zusätzlicher Falten an Fasern zwischen den Falten an Fasern des Bandes aus Verbundwerkstoff in einer Zone des Bandes, die der ersten Decke (7a, 8a, 9a, 10a, 11a, 12a) entspricht, nach dem Teilschritt zur Faltung umfasst.

10. Verfahren nach einem der Ansprüche 1 bis 9,
**dadurch gekennzeichnet, dass** es weiter einen Schritt (E3) zur Fertigstellung nach dem Schritt zum Montieren umfasst, wobei der Schritt (E3) zur Fertigstellung umfasst:
- einen Teilschritt (E3a) zur Bearbeitung von Befestigungslöchern (14), wobei die Befestigungslöcher (14) konfiguriert sind, um das Verbindungselement (1a, 1b, 1c) mindestens am Zentralgehäuse des Flügels (2) und am Flügel (3) des Luftfahrzeugs (AC) zu befestigen,
- einen Teilschritt (E3b) zur Bearbeitung von Einführungsschlitzen (13), die konfiguriert sind, um Rippen zum Ausrichten einzuführen, die an dem Zentralgehäuse des Flügels (2) und an dem Flügel (3) angeordnet sind.

11. Verfahren nach einem der Ansprüche 1 bis 10,
**dadurch gekennzeichnet, dass** die Wärmebehandlung einer Co-Polymerisation oder einer Co-Konsolidierung entspricht.

12. Verbindungselement, das konfiguriert ist, um sich an der Verbindung zwischen einem Zentralgehäuse eines Flügels (2) und einem Flügel (3) eines Luftfahrzeugs (AC) zu beteiligen,
**dadurch gekennzeichnet, dass** es mindestens fünf Vorformlinge (4a, 4b, 4c, 4d, 4e) aus Verbundwerkstoff umfasst, die durch Wärmebehandlung montiert sind, darunter:
- einen Hauptvorformling (4e) in Form eines Bandes, das eine erste Längsachse aufweist, und
- vier L-Vorfomlinge (4a, 4b, 4c, 4d), darunter einen ersten L-Vorformling (4a), einen zweiten L-Vorformling (4b), einen dritten L-Vorformling (4c) und einen vierten L-Vorformling (4d), wobei jeder L-Vorformling (4a, 4b, 4c, 4d) einem Profil entspricht, das eine zweite Längsachse aufweist, deren Querschnitt eine L-Form aufweist, eine erste Decke (7a, 8a, 9a, 10a) senkrecht zu einer zweite Decke (7b, 8b, 9b, 10b) umfassend, wobei die Vorformlinge (4a, 4b, 4c, 4d, 4e) montiert werden, damit das Verbindungselement, das durch die Vorfomlinge (4a, 4b, 4c, 4d, 4e) gebildet wird, einen kreuzförmigen Querschnitt aufweist, indem dafür gesorgt wird, dass:
- die erste Decke (7a) des ersten L-Vorformlings (4a) an die erste Decke (8a) des zweiten L-Vorformlings (4b) angeschlossen wird,
- die zweite Decke (7b) des ersten L-Vorformlings (4a) und die zweite Decke (8b) des zweiten L-Vorformlings (4b) an die erste Oberfläche (5) des Hauptvorformlings (4e) angeschlossen werden,
- die erste Decke (9a) des dritten L-Vorformlings (4c) an die erste Decke (10a) des vierten L-Vorformlings (4d) angeschlossen wird,
- die zweite Decke (9b) des dritten L-Vorfomlings (4c) und die zweite Decke (10b) des vierten L-Vorformlings (4d) an die zweite Oberfläche (6) des Hauptvorformlings (4e) angeschlossen werden,
- die erste Längsachse des Hauptvorformlings (4e) parallel zu den zweiten Längsachsen der L-Vorformlinge (4a, 4b, 4c, 4d) ist.

13. Luftfahrzeug, das Flügel (3) und ein Zentralgehäuse eines Flügels (2) umfasst,
**dadurch gekennzeichnet, dass** die Flügel (3) anhand mindestens eines Verbindungselements (1a, 1b, 1c) nach Anspruch 12 an dem Zentralgehäuse eines Flügels (2) befestigt sind.

## Claims

1. A method for manufacturing a connecting member (1a) configured to contribute to the connection between a center wing box (2) of an aircraft (AC) and a wing (3) of the aircraft (AC), the method comprising the set of the following steps:
- a step (E1) of manufacturing preforms (4a, 4b, 4c, 4d, 4e) made of composite material forming the connecting member (1a);
- a step (E2) of assembling the preforms (4a, 4b, 4c, 4d, 4e) by heat treatment in order to form the connecting member (1a),
**characterized in that** the step (E1) of manufacturing preforms (4a, 4b, 4c, 4d, 4e) corresponds to a step (E1) of manufacturing five preforms (4a, 4b, 4c, 4d, 4e),
and **in that** the manufacturing step (E1) comprises:
- a first manufacturing substep (E1a) consisting in manufacturing a main preform (4e) in the form of a strip having a first longitudinal axis and having a first surface (5) opposite to a second surface (6), and
- four second manufacturing substeps (E1b) consisting in manufacturing one first L-shaped preform (4a), one second L-shaped preform (4b), one third L-shaped preform (4c) and one fourth L-shaped preform (4d), each L-shaped preform corresponding to a profile section having a second longitudinal axis the transverse cross section of which is L-shaped comprising a first web (7a, 8a, 9a, 10a) perpendicular to a second web (7b, 8b, 9b, 10b), and **in that** the assembly step (E2) comprises:
- a preforms-assembly substep (E21) consisting in assembling the preforms (4a, 4b, 4c, 4d, 4e) manufactured in the first manufacturing substep (E1a) and the second manufacturing substeps (E1b), the preforms (4a, 4b, 4c, 4d, 4e) being assembled so that the connecting member (1a) formed by the preforms (4a, 4b, 4c, 4d, 4e) has a cruciform transverse cross section by ensuring that:
• the first web (7a) of the first L-shaped preform (4a) is butted against the first web (8a) of the second L-shaped preform (4b),
• the second web (7b) of the first L-shaped preform (4a) and the second web (8b) of the second L-shaped preform (4b) are butted against the first surface (5) of the main preform (4e),
• the first web (9a) of the third L-shaped preform (4c) is butted against the first web (10a) of the fourth L-shaped preform (4d),
• the second web (9b) of the third L-shaped preform (4c) and the second web (10b) of the fourth L-shaped preform (4d) are butted against the second surface (6) of the main preform (4e),
• the first longitudinal axis of the main preform (4e) is parallel to the second longitudinal axes of the L-shaped preforms (4a, 4b, 4c, 4d),
- a heat treatment substep (E23) consisting in heat treating the preforms (4a, 4b, 4c, 4d, 4e) assembled in the assembly substep (E21).

2. The method as claimed in claim 1,
**characterized in that** the preforms (4a, 4b, 4c, 4d, 4e) are manufactured in such a way that the main preform (4e) has ends which lie flush with the second webs (7b, 8b, 9b, 10b) of the L-shaped preforms (4a, 4b, 4c, 4d) when the preforms (4a, 4b, 4c, 4d, 4e) are assembled, the L-shaped preforms (4a, 4b, 4c, 4d) having ends which lie flush with one another.

3. The method as claimed in any one of claims 1 or 2,
**characterized in that** the main preform (4e, 4h) has continuous reinforcers parallel to the first longitudinal axis, and the L-shaped preforms (4a, 4b, 4c, 4d, 4f, 4g) have continuous reinforcers parallel to the second longitudinal axis.

4. The method as claimed in any one of claims 1 through 3,
**characterized in that** the assembly step (E2) further comprises a stitching substep (E22) following the substep (E21) of assembling the preforms, the stitching substep (E22) consisting in adding reinforcing fibers (21) by stitching in order to attach the preforms to one another.

5. The method as claimed in any one of claims 1 through 4,
**characterized in that** the manufacturing step (E1) consists in manufacturing the preforms (4a, 4b, 4c, 4d, 4e, 4f, 4g, 4h) by continuous forming.

6. The method as claimed in any one of claims 1 through 3,
**characterized in that** the second manufacturing substep (E1b) consists in manufacturing the L-shaped preform (4a, 4b, 4c, 4d) by pultrusion, the second manufacturing substep (E1b) comprising:
- a continuous manufacturing substep (E1b1) consisting in continuously manufacturing a strip made of composite material formed of a superposition of plies of fibers comprising the first web (7a, 8a, 9a, 10a) and the second web (7b, 8b, 9b, 10b),
- a continuous folding substep (E1b2) consisting in continuously folding the strip in such a way that the first web (7a, 8a, 9a, 10a) becomes perpendicular to the second web (7b, 8b, 9b, 10b) in order to form the L-shaped profile section.

7. The method as claimed in claim 6,
**characterized in that** the second manufacturing substep (E1b) further comprises a bending substep (E1b3) following the continuous folding substep (E1b2), the bending substep (E1b3) consisting in curving the L-shaped profile section in the direction of the second longitudinal axis so that the second web (7b, 8b, 9b, 10b, 11b, 12b) becomes curved and the first web (8a, 9a, 10a, 11a, 12a) remains planar.

8. The method as claimed in claim 6,
**characterized in that**, during the continuous manufacturing substep (E1b1), the strip is manufactured in such a way that the first web (7a, 8a, 9a, 10a, 11a, 12a) of the L-shaped preform or preforms (4a, 4b, 4c, 4d, 4f, 4g) comprises a collection of fibers having a direction that makes a non-zero angle with respect to the second longitudinal axis of the L-shaped preform or preforms (4a, 4b, 4c, 4d, 4f, 4g).

9. The method as claimed in claim 6,
**characterized in that** the continuous manufacturing substep (E1b1) comprises a substep of incorporating additional fiber plies between the fiber plies of the strip made of composite material, in a region of the strip that corresponds to the first web (7a, 8a, 9a, 10a, 11a, 12a) after the folding substep.

10. The method as claimed in any one of claims 1 through 9,
**characterized in that** said method further comprises a finishing step (E3) following the assembly step, the finishing step (E3) comprising:
- a substep (E3a) of machining fixing holes (14), the fixing holes (14) being configured to fix the connecting member (1a, 1b, 1c) at least to the center wing box (2) and to the wing (3) of the aircraft (AC),
- a substep (E3b) of machining insertion slots (13) which are configured for inserting alignment ribs arranged on the center wing box (2) and on the wing (3).

11. The method as claimed in any one of claims 1 through 10,
**characterized in that** the heat treatment corresponds to a copolymerization or a co-consolidation.

12. A connecting member configured to contribute to the connection between a center wing box (2) and a wing (3) of an aircraft (AC),
**characterized in that** said member comprises at least five preforms (4a, 4b, 4c, 4d, 4e) made of composite material assembled by heat treatment, these including:
- one main preform (4e) in the form of a strip having a first longitudinal axis, and
- four L-shaped preforms (4a, 4b, 4c, 4d) including one first L-shaped preform (4a), one second L-shaped preform (4b), one third L-shaped preform (4c) and one fourth L-shaped preform (4d), each L-shaped preform (4a, 4b, 4c, 4d) corresponding to a profile section having a second longitudinal axis of which the transverse cross section is L-shaped comprising a first web (7a, 8a, 9a, 10a) perpendicular to a second web (7b, 8b, 9b, 10b), the preforms (4a, 4b, 4c, 4d, 4e) being assembled so that the connecting member formed by the preforms (4a, 4b, 4c, 4d, 4e) has a cruciform transverse cross section by ensuring that:
• the first web (7a) of the first L-shaped preform (4a) is butted against the first web (8a) of the second L-shaped preform (4b),
• the second web (7b) of the first L-shaped preform (4a) and the second web (8b) of the second L-shaped preform (4b) are butted against the first surface (5) of the main preform (4e),
• the first web (9a) of the third L-shaped preform (4c) is butted against the first web (10a) of the fourth L-shaped preform (4d),
• the second web (9b) of the third L-shaped preform (4c) and the second web (10b) of the fourth L-shaped preform (4d) are butted against the second surface (6) of the main preform (4e),
• the first longitudinal axis of the main preform (4e) is parallel to the second longitudinal axes of the L-shaped preforms (4a, 4b, 4c, 4d).

13. An aircraft comprising wings (3) and a center wing box (2),
**characterized in that** the wings (3) are fixed to the center wing box (2) by means of at least one connecting member (1a, 1b, 1c) as specified in claim 12.
